# EUROPÄISCHE PATENTSCHRIFT

(11) **EP 2 652 029 B1**
(45) Veröffentlichungstag und Bekanntmachung des Hinweises auf die Patenterteilung: **09.10.2019**
(21) Anmeldenummer: 11799419.4
(22) Anmeldetag: 15.12.2011
(51) Int. Cl.: C08K 5/00, C08K 5/34, C09B 57/00, C08L 69/00

(54) **ORGANISCHE FARBMITTEL UND EINGEFÄRBTE POLYMER-ZUSAMMENSETZUNGEN MIT HOHER STABILITÄT GEGEN BEWITTERUNG**
ORGANIC COLORANTS AND COLORED POLYMER COMPOSITIONS HAVING HIGH STABILITY AGAINST WEATHERING
COLORANTS ORGANIQUES ET COMPOSITIONS POLYMÈRES COLORÉES À GRANDE STABILITÉ AUX INTEMPÉRIES

(30) Priorität: 17.12.2010 IT RM20100670
(43) Veröffentlichungstag der Anmeldung: 23.10.2013
(73) Patentinhaber: Covestro Deutschland AG, 51373 Leverkusen (DE)
(72) Erfinder: MEYER, Alexander, 40489 Düsseldorf (DE); WAGNER, Michael, 47443 Moers (DE); REICHENAUER, Jörg, 47802 Krefeld (DE)
(74) Vertreter: Levpat
(86) Internationale Anmeldenummer: PCT/EP2011/072916
(87) Internationale Veröffentlichungsnummer: WO 2012/080398

(56) Entgegenhaltungen:
- WO-A1-03/074584
- WO-A1-2007/067462
- US-A- 3 846 369
- US-A1- 2005 119 377

## Beschreibung

Die Erfindung betrifft eine transparente thermoplastische Polymer-Zusammensetzung enthaltend als thermoplastischen Kunststoff Polycarbonat und mindestens eine Kombination von mindestens zwei organischen Farbmitteln, spezieller Struktur.

Gegenstand der vorliegenden Erfindung sind zudem die aus den erfindungsgemäß eingefärbten transparenten thermoplastischen Polymer-Zusammensetzungen hergestellten Erzeugnisse Formkörper beziehungsweise geformten Gegenstände.

Die Einfärbung von Kunststoffen an sich ist bekannt.

Dennoch fehlte es bislang an Farbmittelkombinationen insbesondere für transparente Einstellungen, welche eine neutrale Farbeinstellung - z.B. eine graue Farbe - ermöglichen und über eine ausgezeichnete Bewitterungsstabilität für Anwendungen mit hohen optischen Anforderungen verfügen. Zu Anwendungen mit entsprechend hohen Anforderungen an die verwendeten Farbmittelkombinationen zählen unter anderem transparente Fertigteile für Automobilverscheibungen, die je nach Anwendung in unterschiedlicher Ausprägung eingefärbt werden können. Aufgrund der hohen Lebensdauer von Kraftfahrzeugen kommt es dabei insbesondere im Bereich hochpreisiger Automobile darauf an, daß der gewünschte qualitativ hochwertige Farbeindruck des Materials über den Zeitraum der Nutzungsdauer ohne nennenswerte Einbußen erhalten bleibt.

Verscheibungen aus Zusammensetzungen, enthaltend transparente thermoplastische Polymere wie z.B. Polycarbonat, bieten für den Einsatz im Fahrzeugbereich und für Gebäude viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Scheiben, welche im Kraftfahrzeug-, Schienenfahrzeug- und Luftfahrzeug- bzw. im Infrastrukturbereich eingesetzt werden, müssen zudem eine lange Lebensdauer aufweisen und dürfen während dieser nicht verspröden. Darüber hinaus sollen sich Farbe und Transparenz über die Lebensdauer nicht oder nur geringfügig verändern, ebenso wie die IR-Schutzeigenschaften bei entsprechender IR-Schutzausrüstung der Scheiben, d.h. der Schutz vor Wärmestrahlung. Ferner muss die Scheibe über eine ausreichende Kratzfestigkeit verfügen.

Aufgrund der hohen geforderten Lebensdauer wird als Verscheibungsmaterial häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente und IR-Absorber anorganische Oxide, wie z.B. Eisenoxid, eingesetzt werden, verändern sich die IR- und Farbeigenschaften auch über lange Zeiträume praktisch nicht. Die Verwendung dieser Pigmente in thermoplastischen Materialien ist allerdings nicht möglich, da sie zu Trübung und/oder Abbau der entsprechenden Matrix führt.

Aufgrund der oben geschilderten Vorteile von Kunststoffen besteht daher der Bedarf an Materialien, die sowohl die guten physikalischen Eigenschaften von Thermoplasten als auch die hohe Farbstabilität entsprechend eingefärbter Gläser aufweisen.

Unter den transparenten thermoplastischen Kunststoffen sind zum Beispiel Polymere basierend auf Polycarbonat und Polymethylmethacrylat (PMMA) besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um die Langlebigkeit von thermoplastischen Materialien zu verbessern, ist bekannt, diese mit UV-Schutz und/oder Kratzfestbeschichtungen zu versehen. Darüber hinaus ist eine große Anzahl von Farbmitteln bekannt, die eine hohe Lichtechtheit aufweisen.

Es zeigte sich allerdings, dass die im Stand der Technik genannten thermoplastischen Zusammensetzungen nur unzureichend geeignet sind, wenn eine außerordentlich hohe Farbstabilität erforderlich ist. Dies ist z.B. der Fall, wenn Glasscheiben und transparent eingefärbte Scheiben aus thermoplastischen Material zusammen verbaut werden. Hier zeigt sich, dass die Farbstabilität von Glas gegenüber dem thermoplastischen Material überlegen ist. Farbabweichungen fallen insbesondere dann auf, wenn diese Materialien nebeneinander verbaut werden.

Das Ausbleichen von Farbmitteln führt nicht nur zur Veränderung der Farbeigenschaften sondern führt auch dazu, dass eine höhere Energietransmission auftritt, da etwa 50 % der durch eine Scheibe transmittierten Energie aus dem visuellen Bereich des solaren Spektrums stammt. Letzteres ist besonders im Bereich der Automobil- und Gebäudeverscheibung unerwünscht, da die jeweilige Inenraumtemperatur hierdurch beeinflußt wird.

Ferner kann es erforderlich sein, die Farbgebung des Formkörpers in einer neutralen Farbe zu gestalten, da häufig die Atmosphäre des Innraums bzw. der Inneneinrichtung durch eine intensiv gefärbte Scheibe beeinflußt wird. In der Regel wird ein farbneutrales grau bevorzugt. In bestimmten Ausführungsformen kann die Farbgebung hin zu einem blau-grau, einem grün-grau, rot-grau oder gelb-grau verändert werden.

Die Zusammensetzung muss unter den für Thermoplaste üblichen Temperaturen verarbeitbar sein, ohne daß sich bei der Verarbeitung die Farbe oder andere optischen Eigenschaften deutlich verändern. Im Stand der Technik sind viele Farbstoffe als besonders lichtecht und somit auch als stabil beschrieben worden. Die Lichtechtheit (ermittelt bei 1/3 Richttyptiefe mit 1% TiO₂ (bei Polystyrol 2% TiO₂ in Anlehnung an DIN EN ISO 4892-2; transparente Färbungen mit 0,05% Farbstoff; beurteilt nach 8stufigem Blaumaßstab) der sogenannten Macrolex-Farbstoffe (Lanxess Datenblätter; Technische Information, Lanxess Deutschland GmbH, Functional Chemicals, High Performance Additives, Colorants, 51369 Leverkusen, Deutschland) wie z.B. die Farbstoffe Macrolex® Blau RR (Solvent Blue 97), Macrolex® Violett 3R (Solvent Violet 36), die für die Verwendung in Polycarbonat vorgesehen sind, ist mit 7-8 (8 = Höchstwert) eingestuft worden. Dennoch zeigte sich im Rahmen der vorliegenden Versuche, daß formal als lichtecht eingestufte Farbmittel in Polycarbonatzusammensetzungen nicht die erfindungsgemäße Stabilität bei Bewitterung aufweisen. Vielmehr zeigte sich, dass sich nur eine sehr geringe Anzahl an Farbmitteln spezieller Struktur eignet. Insbesondere sind spezielle Kombinationen geeignet, um die vorliegende Aufgabe zu lösen.

Es bestand daher die Aufgabe eine Farbmittelkombination mit hoher Farbstabilität gegen Bewitterung für transparente thermoplastische Polymere zur Verfügung zu stellen. Der visuelle Farbeindruck der gefärbten transparenten thermoplastischen Polymer-Zusammensetzung sollte sich dabei über die Lebensdauer nur geringfügig verändern.

Hierbei war es zudem Aufgabe der vorliegenden Erfindung, die folgenden Vorgaben zu erfüllen: Die Veränderung der Farbwerte ΔE nach 3000 h künstlicher Bewitterung mit Xenon-Belichtung bei 0,75 W soll kleiner als 5,0, bevorzugt kleiner als 4,0, insbesondere bevorzugt kleiner als 3,0 sein.

Ferner soll sich auch der visuelle Farbeindruch nicht ändern, womit insbesondere Schlieren und punktuell hohe Farbkonzentrationen gemeint sind.

In einer besonderen Ausführungsform ist eine neutral graue Farbe mit Farbwerten von a* = 0 ± 5 und b* = 0 ± 5, insbesondere a* = 0 ± 4 und b* = 0 ± 4 bevorzugt.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen. Transparente thermoplastischen Polymere beziehungsweise die thermoplastischen Polymer-Zusammensetzungen im Sinne der vorliegenden Erfindung weisen ferner eine Anfangstrübung vor Bewitterung von weniger als 5,0 %, bevorzugt 4,0 %, weiter bevorzugt weniger als 3,0 %, insbesondere bevorzugt weniger als 2,0 % auf.

Ferner war es die Aufgabe der vorliegenden Erfindung, gefärbte transparente thermoplastische Polymer-Zusammensetzungen enthaltend mindestens eine organische Farbmittelkombination für die Herstellung von Mehrschichtartikeln, Form- und Fertigteilen zur Verfügung zu stellen.

Überraschenderweise konnte die Aufgabe durch die erfindungsgemäßen transparenten thermoplastischen Polymer-Zusammensetzungen,hergestellt unter Verwendung der erfindungsgemäßen organischen Farbmittelkombinationen, gelöst werden.

Erfindungsgemäße Farbmittelkombinationen sind folgende Kombinationen:
I. (1a) und/oder (1b) und (7)
II. (1a) und/oder (1b) und (4) und (7)
III. (1a) und/oder (1b) und (5) und (7)
IV. (3) und (4)
V. (3) und (5)
VI. (3) und (4) und (7)
VII. (3) und (5) und (7)
VIII. (1a) und/oder (1b) und (8)
IX. (7) und (4)
X. (7) und (5)
wobei die oben genannten Strukturen wie folgt definiert sind: .
a) 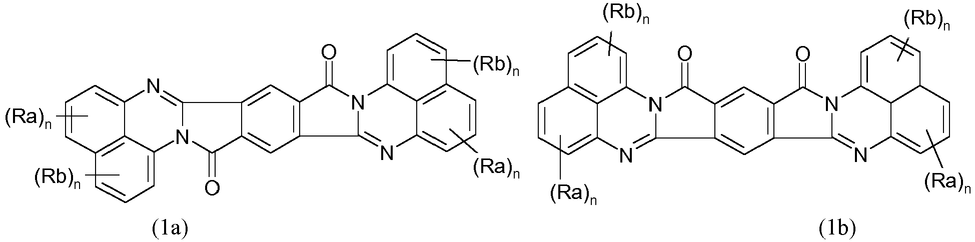 wobei
   - Ra und Rb unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
   - n steht unabhängig vom jeweiligen R für eine natürliche Zahl zwischen 0 und 3, wobei der Rest für n=0 Wasserstoff ist.

   In einer bevorzugten Ausführungsform sind Ra und/oder Rb Cl und stehen in o und/oder p-Positionen zu den Kohlenstoffatomen, welche die Aminfunktionalitäten tragen, wie z.B. di-orthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta Position zu den Kohlenstoffatomen, welche die Stickstofffunktionalitäten tragen, befindet.
   In einer besonders bevorzugten Ausführungsform ist in allen Ringen n=0, so daß alle Ra und Rb = H sind.
   Die Strukturen (1a) und (1b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-%) von (1a) und (1b) eingesetzt.
   Die Herstellung derartiger Farbmittel ist z.B. in DE 2148101 oder WO 2009 074504 A1 beschrieben worden.
   Bevorzugt enthält die erfindungsgemäße Zusammensetzung mindestens ein Farbmittel der Strukturen (1a) und(1b)In einer weiteren Ausführungsform werden die Strukturen (1a)und (1b) als jeweils reine Isomere eingesetzt, wobei die reinen Isomere beispielsweise durch präparative HPLC erhalten werden können. 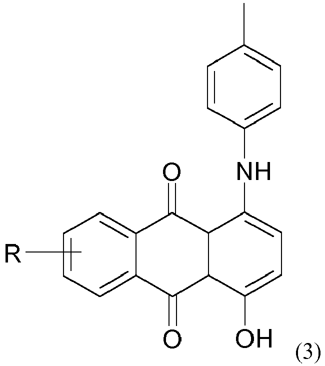
   R ist ausgewählt aus der Gruppe, die aus H und p-Methylphenlyamin-Rest besteht; , bevorzugt ist R = H.
   Derartige Farbmittel sind z.B. unter dem Handelsnamen Macrolex® Violet B von der Firma Lanxess AG erhältlich. In einer besonderen Ausführungsform wird kein Farbmittel der Struktur (3) eingesetzt. und
b) 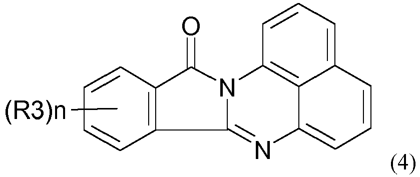 wobei R3 bevorzugt für Halogen, und insbesondere bevorzugt für Cl, steht, wobei besonders bevorzugt n=4 ist. Weiter bevorzugt ist eine Ausführungsform mit n=0, so daß R3 = H sind.

Derartige Farbmittel sind z.B. unter Macrolex® Orange 3G oder Macrolex® Rot EG bei der Firma Lanxess AG erhältlich.

Dabei kann, wenn R3 für Cl steht und n = 4 ist, statt dem Farbmittel der Struktur (4) das Farbmittel mit der Struktur (5) eingesetzt werden, um dieselben Farbeigenschaften zu erzielen:

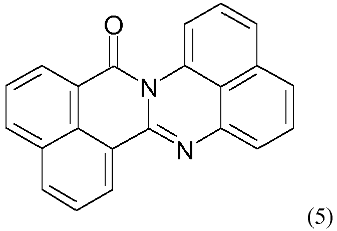

Derartige Farbmittel sind z.B. unter dem Handelsnamen Macrolex® Rot E2G bei der Firma Lanxess AG erhältlich. 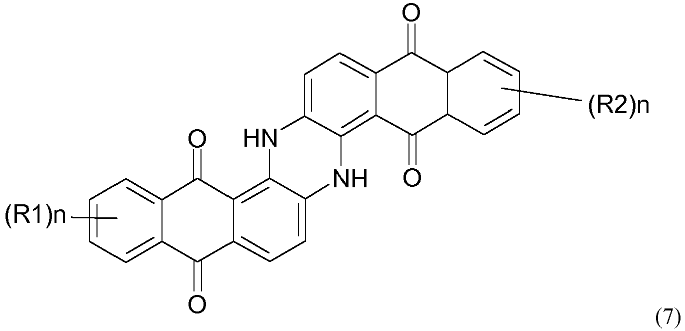 wobei
- R1 und R2 unabhängig voneinander für einen linearen oder verzweigten Alkylrest, oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht für eine natürliche Zahl zwischen 0 und 4.

In einer besonders bevorzugten Ausführungsform ist in allen Ringen n=0, so daß alle R1 und R2 = H sind.

Farbmittel dieser Struktur (7) sind kommerziell erhältlich unter der Paliogen Blau Reihe der BASF AG.

Bei Verwendung von Farbmitteln der Struktur (7) sind insbesondere die Pigmente bevorzugt, die ein Schüttvolumen (bestimmt nach DIN ISO 787-11) von 21/kg - 10 1/kg, bevorzugt 3 1/kg - 8 1/kg, eine spezifische Oberfläche (bestimmt nach DIN 66132) von 5 m²/g - 60 m²/g, bevorzugt 10 m²/g - 55 m²/g, und einen pH-Wert (bestimmt nach DIN ISO 787-9) von 4 - 9 aufweisen.

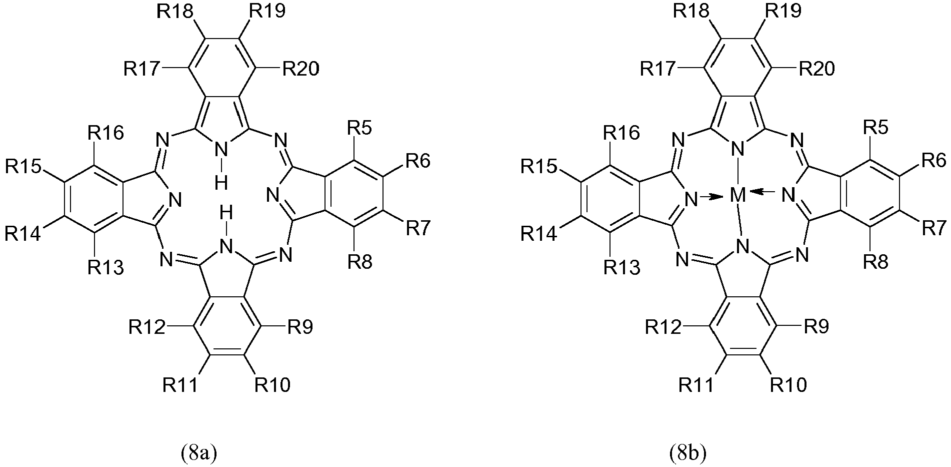

Die Reste R(5-20) sind jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=C1: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (8b) mit M=Cu und R(5-20)=H als Heliogen® Blau K 6911D oder Heliogen® Blau K 7104 KW von der BASF AG, Ludwigshafen erhältlich.

Verbindungen der Struktur (8a) sind z.B. als Heliogen® Blau L 7460 von der BASF AG, Ludwigshafen, erhältlich.

Von den Strukturen (4), (7) und (8a) bzw. (8b) ist die Verwendung der Strukturen (4), (7) und (8b) insbesondere bevorzugt, wobei wie oben beschrieben, die Struktur (4) durch Struktur (5) unter den beschriebenen Voraussetzungen ersetzt werden kann. Ganz besonders bevorzugt ist die Verwendung von Farbmitteln der Struktur (7
Eine besonders bevorzugte Gruppe von Farbmittelkombinationen enthält keine Farbmittel der Struktur (3).

Während in einer alternativen Ausführungsform Farbmittelkombinationen mit mindestens jeweils einem Farbmittel aus den Gruppen a) und b) bevorzugt eingesetzt werden, können abweichend hiervon Farbmittelkombinationen nach IX und X in einer besonderen Ausführungsform verwendet werden. Dabei werden in diesen besonders geeigneten Farbmittelkombinationen die unter den Komponenten a) und b) als bevorzugt genannten expliziten Farbmittelstrukturen entsprechend bevorzugt eingesetzt. Die als Komponenten a) und b) im Rahmen der vorliegenden Erfindung offenbarten organischen Farbmittel werden bezogen auf die jeweilige Einzelkomponente in Mengen von 0,000001 Gew.-% bis 1,000000 Gew.-%, bevorzugt von 0,00005 Gew.-% bis 0,50000 Gew.-% und besonders bevorzugt von 0,0001 Gew.-% bis 0,1000 Gew.-% in thermoplastischen Polymer-Zusammensetzungen verwendet .

In einer speziellen Ausführungsform für transparent eingefärbte thermoplastische Polymer-Zusammensetzungen werden die erfindungsgemäßen organischen Farbmittel bezogen auf die jeweilige Einzelkomponente in Mengen von 0,00001 Gew.-% bis 0,30000 Gew.-%, bevorzugt von 0,00005 Gew.-% bis 0,10000 Gew.-% und besonders bevorzugt von 0.00010 Gew.-% bis 0,05000 Gew.-% in den thermoplastischen Polymer-Zusammensetzungen verwendet.

Die Mengenangaben in Gew.-% beziehen sich hierbei auf eine resultierende Polymer-Zusammensetzung enthaltend die erfindungsgemäßen organischen Farbmittelkombinationen.

In einer bevorzugten Ausführungsform bestehen die erfindungsgemäßen Farbmittelzusammensetzungen nur aus Verbindungen der oben genannten Strukturen 1 - 8.

Die erfindungsgemäßen transparenten thermoplastischen Polymer-Zusammensetzungen enthaltend die erfindungsgemäßen organischen Farbmittelkombinationen basieren hierbei auf der Polymer-Komponente c).

Die Polymer-Komponente c) enthält:
als transparenten thermoplastischen Kunststoff, Polycarbonat, Copolycarbonat, Polyestercarbonat, oder Mischungen der genannten Komponenten, wobei der transparente thermoplastische Kunststoff in einer Menge zugegeben wird, daß diese mit allen übrigen Komponenten 100 Gew.-% ergibt.

Auch Mischungen von mehreren transparenten thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.%) oder Polyester bevorzugt ist.

Eine weitere spezielle Ausführungsform enthält in diesem Zusammenhang eine Mischung aus Polycarbonat und PMMA mit weniger als 2,0%, vorzugsweise weniger als 1,0%, weiter bevorzugt weniger als 0,5%, wobei mindestens 0,01 % PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2% und besonders bevorzugt 0,1% bezogen auf die Menge Polycarbonat, wobei das PMMA bevorzugt ein Molgewicht <40.000 g/mol aufweist.

Eine alternative weitere spezielle Ausführungsform enthält eine Mischung aus PMMA und Polycarbonat mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 10.000 bis 50.000, vorzugsweise von 14.000 bis 40.000 und insbesondere von 16.000 bis 32.000, ermittelt durch Gelpermeationschromatographie mit Polycarbonateichung Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingestzt werden.

Geeignete Verzweiger für Polycarbonate sind aus der Literatur bekannt und beispielsweise beschrieben in den Patentschriften US-B 4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die erfindungsgemäßen transparenten thermoplastischen Polymer-Zusammensetzungen basierend auf der Polymer-Komponete c) können hierbei neben den erfindungsgemäßen organischen Farbmittelkombinationenen der Komponenten a) und b) optional noch weitere Komponenten enthalten. Hierzu zählen:
d) optional 0,000 Gew.-% bis 0,015 Gew.-%, bevorzugt 0,00150 Gew.-% bis 0,01500 Gew.-%, weiter bevorzugt 0,00180 Gew% bis 0,01100 Gew.-% und besonders bevorzugt 0,00200 Gew% bis 0,00900 Gew.-% mindestens eines organischen oder anorganischen IR Absorbers berechnet als Feststoffanteil an IR-Absorber in der Polymer-Gesamtzusammensetzung. In einer speziellen Ausführungsform werden die IR-Absorber in einer Menge von bevorzugt 0,00350 Gew.-% bis 0,00850 Gew.-% und insbesondere bevorzugt 0,00400 Gew.-% bis 0,00800 Gew.% berechnet als Feststoffanteil an IR-Absorber in der Polymer-Gesamtzusammensetzung eingesetzt. Feststoffanteil an IR-Absorber meint in diesem Zusammenhang den IR-Absorber als Reinstoff und nicht eine Suspension oder andere Zubereitung, enthaltend den Reinstoff.
   Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart.
   Von den in der zitierten Literatur genannten IR-Absorbern sind solche auf Borid- und Wolframatbasis sowie auf ITO und ATO basierende Absorber sowie Kombinationen daraus bevorzugt.
e) optional 0,00 Gew% bis 20,00 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% mindestens eines UV-Absorbers. Geeignete UV-Absorber sind beispielsweise beschrieben in der EP 1 308 084 A1, in der DE 102007011069 A1 sowie in der DE 10311063 A1.
f) optional 0,0 Gew.-% bis 5,0 Gew.-%, bevorzugt 0,01 Gew.-% bis 1,00 Gew.-% mindestens eines weiteren Additivs. Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, Thermostabilisatoren, anorganischen Pigmente, Entformungsmittel oder Verarbeitungshilfsmittel. Die bereits als Komponenten a), b), d) und e) der vorliegenden Erfindung offenbarten Substanzen sind in diesem Zusammenhang ausdrücklich nicht Bestandteil der Komponente f).
   Die Polymer-Zusammensetzung enthält optional ein anorganisches Pigment, bevorzugt Ruß. Der Ruß liegt bevorzugt fein dispergiert in der organischen Polymermatrix vor und ist bevorzugt nanoskalig. Geeignete Ruße weisen eine durchschnittliche Teilchengröße auf von bevorzugt weniger als 100 Nanometer (nm), weiter bevorzugt weniger als 75 nm , noch weiter bevorzugt weniger als 50 nm und besonders bevorzugt weniger als 40 nm, wobei die durchschnittliche Teilchengröße vorzugsweise größer als 0,5 nm. weiter bevorzugt größer als 1 nm und besonders bevorzugt größer als 5 nm ist. Die Teilchengröße wird durch TEM (Transmissionselektronenmikroskopie) bestimmt.
g) optional 0 Gew.-% bis 50 Gew.-%, bevorzugt 0 Gew.-% bis 35 Gew.-%, weiter bevorzugt 0 Gew.-% bis 30 Gew.-%, besonders bevorzugt 10 Gew.-% bis 30 Gew% Füll- und Verstärkungsstoffe. Füll- und Verstärkungsstoffe für Polymer-Zusammensetzungen sind beispielsweise beschrieben in der EP 1 624 012 A1, DE 3742881 A1, US 6860539 B2, US 20060105053 A1, DE 102006055479 A1, WO 2005030851 A1 sowie in der WO 2008122359 A1.

Die obigen Mengenangaben beziehen sich jeweils auf die gesamte Polymer-Zusammensetzung.

In den erfindungsgemäßen gefärbten transparenten thermoplastischen Polymer-Zusammensetzungen ist mindestens eine Farbmittelkombination der unter I bis X offenbarten Kombinationen enthalten.

Bevorzugt ist in den erfindungsgemäßen gefärbten transparenten thermoplastischen Polymer-Zusammensetzungen eine Kombination aus erfindungsgemäßen organischen Farbmitteln enthalten, wobei die erfindungsgemäßen organischen Farbmittelkombinationen bestehen aus mindestens einem Farbmittel ausgewählt aus den für Komponente a) angegebenen Strukturen und mindestens einem Farbmittel ausgewählt aus den für Komponete b) angegebenen Strukturen.

Weiter bevorzugt werden in den erfindungsgemäßen gefärbten transparenten thermoplastischen Polymer-Zusammensetzungen explizit die Farbmittelkombinationen verwendet, die bereits im Rahmen der vorliegenden Offenbarung als besonders geeignet herausgestellt wurden. Dabei werden in diesen besonders geeigneten Farbmittelkombinationen die unter den Komponenten a) und b) als bevorzugt genannten expliziten Farbmittelstrukturen entsprechend bevorzugt eingesetzt.

Die Zusammensetzung muss unter den für Thermoplaste üblichen Temperaturen, d.h. bei Temperaturen oberhalb von 300 °C, wie z.B. 350 °C verarbeitbar sein, ohne daß sich bei der Verarbeitung die Farbe oder die Leistungsdaten deutlich verändern.

Die Herstellung der erfindungsgemäßen Polymer-Zusammensetzungen enthaltend die Komponenten a) bis g) erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren wie unter anderem als Masterbatch eingebracht werden.

Die Verwendung von Masterbatchen sowie von Pulvermischungen oder kompaktierten Vormischungen ist insbesondere zum Einbringen der Komponenten a), b), d), e) und f) geeignet. Hierbei können wahlweise alle vorgenannten Komponenten vorgemischt werden. Alternativ sind aber auch Vormischungen von a) und b) oder von a), b) und d) sowie beliebige andere Kombinationen möglich. In allen Fällen werden für eine bessere Dosierbarkeit bei der Herstellung der thermoplastischen Polymer-Zusammensetzungen die vorgenanten Komponenten-Vormischungen bevorzugt mit pulverförmiger Polymerkomponente c) so aufgefüllt, daß gut handhabbare Gesamtvolumina entstehen.

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten beziehungsweise Formkörper aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Erfindungsgemäß bevorzugte Erzeugnisse, Formkörper oder geformte Gegenstände sind Verscheibungen, beispielsweise Autofenster, Fenster von Schienen- und Luftfahrzeugen, Autosonnendächer, Sicherheitsscheiben, Bedachungen oder Gebäudeverglasungen, LEDs, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, , Ampellinsen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung.

Bei Verscheibungsmaterialien trägt der Artikel mindestens eine Kratzfest- und/oder. Antireflexbeschichtung auf mindestens einer Seite.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Schmelzvolumenrate:

Die Bestimmung des Schmelzvolumenrate (MVR) erfolgt nach ISO 1133 (bei 300 °C; 1,2 kg).

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

### Farbveränderung:

ΔE ist ein errechneter Wer für den empfundenen Farbabstand nach ASTM D 2244. Bei den vorliegenden Versuchen wurde Lichtart D 65/10° verwendet. Für die Berechnung des ΔE-Wertes wurde die Formel 7 in der ASTM D 2244 herangezogen.

### Bewitterung:

Die künstliche Bewitterung mit Xenon-Belichtung wird nach Norm ASTM G 155 in einem Xenon-Weatherometer CI 5000 der Firma Atlas an Farbmusterplatten (s. Herstellung der Prüfkörper) durchgeführt. Als UV-Filter wurden zwei Borosilikatfilter verwendet. Die Einstrahlungsstärke beträgt 0.75 W/m²/nm bei 340 nm. Die Schwarzstandardtemperatur beträgt 80°C, die Probenraumtemperatur 40°C. Die Proben werden alle 120 min für 18 min beregnet, wobei die Belichtung auch während der Beregnungsphase eingeschaltet bleibt. Das vorgenannte Bewitterungsverfahren wird im folgenden Xe-Wom 0.75W genannt.

### Visueller Farbeindruck:

Die Bestimmung des visuellen Farbeindrucks erfolgt mit bloßem Auge anhand von Farbmusterplatten (s. Herstellung der Prüfkörper). Hierzu werden die Farbmusterplatten unter Tageslicht vor einem weißen Hintergrund betrachtet und entsprechend klassifiziert (Klassifizierung s. Tabelle Prüfkörper und Meßergebnisse)

### Trübung:

Die Trübung wurde bestimmt nach ASTM D 1003 mit einem BYK Gardner Haze Gard.

Materialien zur Herstellung der Probekörper:
Komponente a)
   - Als Farbmittel der Formel (1a, 1b) wird das Produkt aus A (alle R = H, siehe unten) verwendet.
   - Als Farbmittel der Formel (3) wird Macrolex Violet B (Solvent Violet 13, CAS-No. 81-48-1) von der Firma Lanxess AG, Leverkusen, verwendet.
Komponente b)
   - Als Farbmittel der Struktur (4) wird Macrolex Rot EG (Solvent Red 135, CAS-No. 20749-68-2) von der Firma Lanxess AG, Leverkusen, verwendet.
   - Als Farbmittel der Struktur (7) wird Paliogen Blau 6385 (Pigment Blue 60, CAS-No. 81-77-6) von der BASF SE, 67065 Ludwigshafen, Deutschland, verwendet. Dieses Farbmittel weist ein Schüttvolumen von 7 1/kg, einen pH-Wert von 6 - 9 und eine spezifische Oberfläche von 40 m2/g auf.
   - Als Farbmittel der Struktur (8b) wird Heliogen Blau K 6911 D (CAS-No. 147-14-8) der Firma BASF SE, 67065 Ludwigshafen, Deutschland verwendet.
Komponente c)
   - Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1033), nachfolgend als PC 1 bezeichnet.
   - Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), nachfolgend als PC 2 bezeichnet.
   - PC 2 enthält noch eine Additivmischung bestehend aus Entformungsmittel, Thermostabilisator und UV-Stabilisator. Als Entformungsmittel wird Pentaerythrittetrastearat (CAS 115-83-3), als Thermostabilisator Triphenylphosphin (CAS 603-35-0) und als UV-Stabilisator Tinuvin® 329 (CAS 3147-75-9) eingesetz.
Komponente d)
   - Lanthanhexaborid, LaB₆ (KHDS 06 der Firma Sumitomo Metal Mining, Japan, CAS-No. 857255-66-4). Das Produkt liegt in Form einer pulverförmigen Dispersion vor. Die Gewichtsangaben in den Beispielen beziehen sich auf das Produkt KHDS 06, wobei der Feststoffgehalt an Lanthanhexaborid in der eingesetzten kommerziellen KHDS06-Dispersion 21,5 Gew.-% beträgt.
   - Lanthanhexaborid, LaB₆ (KHDS 872G2 der Firma Sumitomo Metal Mining, Japan, CAS-No. 949005-03-2). Das Produkt liegt in Form einer pulverförmigen Dispersion vor. Die Gewichtsangaben in den Beispielen beziehen sich auf das Produkt KHDS 872G2, wobei der Feststoffgehalt an Lanthanhexaborid in der eingesetzten kommerziellen KHDS 872G2 Dispersion 10,0 Gew.-% beträgt.
   - Lumogen IR 765 (ein Quaterrylen, CAS-No. 943969-69-5) der Firma BASF SE, 67065 Ludwigshafen, Deutschland.
   - Als IR-Absorber auf Basis von ATO wurde eine pulverförmige Dispersion (FMDS 874 der Firma Sumitomo Metal Mining, Japan, Polyacrylat-Dispersion, CAS-No. 953384-75-3) eingesetzt, wobei der Feststoffgehalt an SnO₂:Sb in der Dispersion 25 Gew.-% betrug.
Komponente f)
   - Als nanoskaliger Ruß (Partikelgröße ca . 17 nm) werden Black Pearls® 800 (CAS-No. 1333-86-4) der Firma Cabot Corp. eingesetzt.

### Farbmittel für Vergleichsbeispiele

Als weiteres nicht erfindungsgemäßes Farbmittel wird Macrolex Blau RR (Color Index: Solvent Blue 97; CAS-No.: 32724-62-2) der Firma Lanxess Deutschland GmbH eingesetzt.

Als weiteres nicht erfindungsgemäßes Farbmittel wird Macrolex Violett 3R Gran. (Color Index: Solvent Violet 36; CAS-No: 61951-89-1) der Firma Lanxess Deutschland GmbH eingesetzt.

### Herstellung der thermoplastischen Polymer-Zusammensetzungen durch Compoundierung:

Die Compoundierung der Additive erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit der in den Beispielen angegebenen Mengen an Komponenten. Hierbei wird zunächst zur besseren Vermischung eine Pulvermischung aus PC 1 (10 Gew.-% Pulvermischung bezogen auf die Gesamtzusammensetzung) enthaltend die unten angegebenen weiteren Komponenten angefertigt. Diese Pulvermischung wird bei der Compoundierung zu PC 2 zudosiert.

### Herstellung der Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x Z mm) verarbeitet; Z ist dabei 3,2 mm, 4,0 mm bzw. 5,0 mm.

### Herstellung von Substanzen der Komponente a)

Unter anderem wurden in den erfindungsgemäßen Beispielen Strukturen der Formel (1a) und (1b) eingesetzt. Die Herstellung dieser Farbstoffe erfolgte in Anlehnung an DE 2148101 wie folgt:
A. Herstellung eines 1:1 Gemisches (Gew.-%) von (1a) und (1b):
   5,62g (0,025mol) Benzol-1,2,4,5-tetracarbonsäuredianhydrid und 7,99g (0,05mol) 1,8-Diaminonaphthalin werden in 75ml N- Ethylpyrrolidon bei Raumtemperatur vorlegt und langsam auf 150 °C erhitzt. Bei dieser Temperatur wird für 5 Stunden gerührt. Nach Abkühlen werden 125ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80°C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 500ml Wasser gegeben. Der Niederschlag wird abfiltriert, mit Wasser gewaschen und im Hochvakuum bei 80 °C getrocknet. Man erhält 12,5g lilafarbendes Pulver.

### Lackierung der Prüfkörper:

Als Primer wird das Produkt SHP470FT (Momentive Performance Materials Inc. Wilton, CT USA) verwendet. Als Schutzlack wird das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Prüfkörper wurden mit sogenannten Iso-Tüchern (LymSat® der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probekörper erfolgt per Hand nach dem Flutverfahren. Hierbei wird die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Um eine ausreichende und vergleichbare Schutzwirkung gegen Bewitterung zu erreichen soll die Primerschichtdicke für die nachfolgenden Beispiele im Bereich 1,2 - 4,0 µm und die Dicke des Topcoats zwischen 4,0 und 8,0 µm liegen. In der nachfolgenden Ergebnistabelle wird die Primerschichtdicke vor dem Spiegelstrich, die Dicke des Topcoats nach dem Spiegelstrich in der Spalte TopCoat angegeben.

### Beispiel 1 (Vergleichsbeispiel)

Es wird eine Polymerzusammensetzung enthaltend die Mengen der folgenden Komponenten wie oben beschrieben durch Compoundierung hergestellt.

| | |
|---|---|
| Macrolex Rot EG (Komponente b)) : | 0,00313 Gew.-% |
| Macrolex Blau RR (Farbmittel für Vergleichsbeispiele) : | 0,00320 Gew.-% |
| Lumogen IR 765 (Komponente d)): | 0,00180 Gew.-% |
| KHDS 06 (Komponente d)): | 0,01350 Gew.-% |
| BlackPearls 800 (Komponente f)): | 0,00144 Gew.-% |
| PC 1 (Komponente c)): | 9,97693 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 2 (Vergleichsbeispiel)

Es wird eine Polymerzusammensetzung enthaltend die Mengen der folgenden Komponenten wie oben beschrieben hergestellt:

| | |
|---|---|
| Macrolex Rot EG (Komponente b)): | 0,00335 Gew.-% |
| Macrolex Blau RR (Farbmittel für Vergleichsbeispiele): | 0,00315 Gew.-% |
| Lumogen IR 765 (Komponente d)): | 0,00140 Gew.-% |
| KHDS 872G2 (Komponente d)): | 0,06000 Gew.-% |
| BlackPearls 800 (Komponente f)): | 0,00128 Gew.-% |
| PC 1 (Komponente c)): | 9,93082 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 3 (Vergleichsbeispiel)

Es wird eine Polymerzusammensetzung enthaltend die Mengen der folgenden Komponenten wie oben beschrieben hergestellt:

| | |
|---|---|
| Macrolex Rot EG (Komponente b)): | 0,002450 Gew.-% |
| Macrolex Blau RR (Farbmittel für Vergleichsbeispiele): | 0,003090 Gew.-% |
| Heliogen Blau K6911D (Komponente b)): | 0,000095 Gew.-% |
| KHDS 872G2 (Komponente d)): | 0,057000 Gew.-% |
| BlackPearls 800 (Komponente f)): | 0,001410 Gew.-% |
| PC 1 (Komponente c)): | 9,935955 Gew.-% |
| PC 2 (Komponente c)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 4 (Vergleichsbeispiel)

Es wird eine Polymerzusammensetzung enthaltend die Mengen der folgenden Komponenten wie oben beschrieben hergestellt:

| | |
|---|---|
| Macrolex Rot EG (Komponente b)): | 0,00550 Gew.-% |
| Macrolex Blau RR (Farbmittel für Vergleichsbeispiele): | 0,00392 Gew.-% |
| Heliogen Blau K6911D (Komponente b)): | 0,00133 Gew.-% |
| KHDS 06 (Komponente d)): | 0,03130 Gew.-% |
| BlackPearls 800 (Komponente f)): | 0,00167 Gew.-% |
| PC 1 (Komponente c)): | 9,95628 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 5 (Vergleichsbeispiel)

Es wird eine Polymerzusammensetzung enthaltend die Mengen der folgenden Komponenten wie oben beschrieben hergestellt:

| | |
|---|---|
| Macrolex Rot EG (Komponente b)): | 0,00370 Gew.-% |
| Macrolex Violett 3R Gran (Farbmittel für Vergleichsbeispiele): | 0,00240 Gew.-% |
| Heliogen Blau K6911D (Komponente b)): | 0,00230 Gew.-% |
| KHDS 06 (Komponente d)): | 0,03000 Gew.-% |
| BlackPearls 800 (Komponente f)): | 0,00065 Gew.-% |
| PC 1 (Komponente c)): | 9,96095 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 6 (Vergleichsbeispiel)

Es wird eine Polymerzusammensetzung enthaltend die Mengen der folgenden Komponenten wie oben beschrieben hergestellt:

| | |
|---|---|
| Macrolex Rot EG (Komponente b)): | 0,00470 Gew.-% |
| Macrolex Violett 3R Gran (Farbmittel für Vergleichsbeispiele): | 0,00117 Gew.-% |
| Heliogen Blau K6911D (Komponente b)): | 0,00262 Gew.-% |
| YMDS 874 (Komponente d)): | 0,10000 Gew.-% |
| BlackPearls 800 (Komponente f)): | 0,00188 Gew.-% |
| PC 1 (Komponente c)): | 9,88963 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 8 (Erfindungsgemäß)

Es wird eine Polymerzusammensetzung enthaltend die Mengen der folgenden Komponenten wie oben beschrieben hergestellt:

| | |
|---|---|
| Paliogen Blau L6385 (Komponente b)): | 0,00278 Gew.-% |
| 1:1 Gemisches (Gew.-%) von (1a) und (1b) (Komponente a)): | 0,00236 Gew.-% |
| KHDS 872G2 (Komponente d)): | 0,07000 Gew.-% |
| BlackPearls 800 (Komponente f)): | 0,00220 Gew.-% |
| PC 1 (Komponente c)): | 9,92266 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 9 (Erfindungsgemäß);

Es wird eine Polymerzusammensetzung enthaltend die Mengen der folgenden Komponenten wie oben beschrieben hergestellt:

| | |
|---|---|
| Paliogen Blau L6385 (Komponente b)): | 0,00211 Gew.-% |
| 1:1 Gemisches (Gew.-%) von (1a) und (1b) (Komponente a): | 0,00248 Gew.-% |
| KHDS 872G2 (Komponente d)): | 0,09000 Gew.-% |
| FMDS 874 (Komponente d)): | 0,12552 Gew.-% |
| BlackPearls 800 (Komponente f)): | 0,00139 Gew.-% |
| PC 1 (Komponente c)): | 9,77850 Gew.-% |
| PC 2 (Komponente c)): | 90,00000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

**Tabelle 1: Prüfkörper und Meßergebnisse**

| Beispiel | Dicke* [mm] | Primer/TopCoat* [µm] | ΔE 1000h ** | ΔE 2000h ** | ΔE 3000h ** | Visueller Farbeindruck 3000h ** | Visueller Farbeindruck *** |
|---|---|---|---|---|---|---|---|
| 1 (Vergleich) | 5,0 | 2,2/5,1 | 1,89 | 3,41 | 4,76 | - | + |
| 2 (Vergleich) | 5,0 | 1.7/5.6 | 1,88 | 3,60 | 5,10 | - | + |
| 3 (Vergleich) | 5,0 | 1.4/5.4 | 1,85 | 3,69 | 5,11 | - | + |
| 4 (Vergleich) | 3,2 | 1.8/4.3 | 3,01 | 5,30 | 7,29 | -- | + |
| 5 (Vergleich) | 3,2 | 1,3/6,1 | 1,50 | 2,73 | 3,77 | O | + |
| 6 (Vergleich) | 4,0 | 2.8/4.2 | 1,44 | 2,64 | 3,71 | O | + |
| 8 (erfindungsgemäß) | 3,2 | 1.4/6.4 | 0,94 | 1,29 | 1,69 | + | + |
| 9 (erfindungsgemäß) | 3,2 | 1.5/6.3 | 1,02 | 1,80 | 2,91 | + | + |

| | | | | | | | |
|---|---|---|---|---|---|---|---|
| *Angaben zum Prüfkörper; **nach Bewitterung; ***vor Bewitterung + ansprechend ; O ausreichend; - schlecht; -- sehr schlecht | | | | | | | |

Insgesamt ist festzustellen, dass nur die erfindungsgemäßen Mischungen die geforderte Farbstabilität (ΔE) aufweisen.

Die Vergleichbeispiele zeigen, dass die Farbmittel nicht beliebig kombiniert werden können. Die Vergleichsbeispiele 1 bis 6 weisen zwar einen ähnlichen Farbeindruck wie die erfindungsgemäßen Beispiele auf. Allerdings zeigen diese Beispiele eine deutliche und unerwünschte Farbverschiebung nach Bewitterung. Auch wenn die Vergleichsbeispiele zum Teil Farbmittel enthalten, die auch in den erfindungsgemäßen Zusammensetzungen verwendet werden, sind diese nicht witterungsstabil. Damit zeigt sich überraschend, dass nur die Verwendung der erfindungsgemäßen Farbmittelkombinationen zu den erwünschten farbstabilen Polymerzusammensetzungen führt.

## Patentansprüche

1. Transparente thermoplastische Polymer-Zusammensetzung, enthaltend
als thermoplastischen Kunststoff Polycarbonat
und
eine Farbmittel-Zusammensetzung zur bewitterungsstabilen Färbung transparenter thermoplastischer Zusammensetzungen, enthaltend eine Farbmittelkombination der Strukturen ausgewählt aus:
I. (1a) und/oder (1b) und (7)
II. (1a) und/oder (1b) und (4) und (7)
III. (1a) und/oder (1b) und (5) und (7)
IV. (3) und (4)
V. (3) und (5)
VI. (3) und (4) und (7)
VII. (3) und (5) und (7)
VIII. (1a) und/oder (1b) und (8)
IX. (7) und (4)
X. (7) und (5)
wobei die Strukturen wie folgt sind:
1a, 1b: 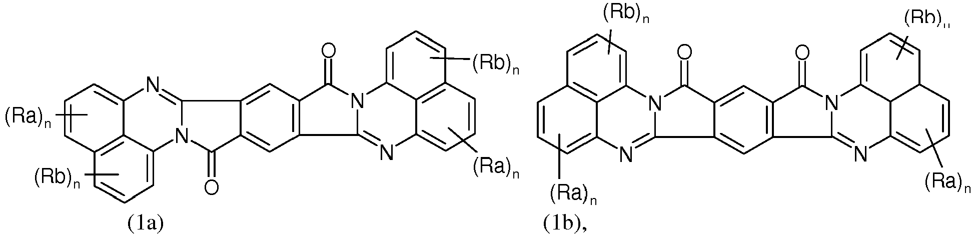 wobei
- Ra und Rb unabhängig voneinander für einen linearen oder verzweigten Alkylrest oder Halogen stehen;
- n steht unabhängig vom jeweiligen R für eine natürliche Zahl zwischen 0 und 3, wobei der Rest für n=0 Wasserstoff ist;
3: 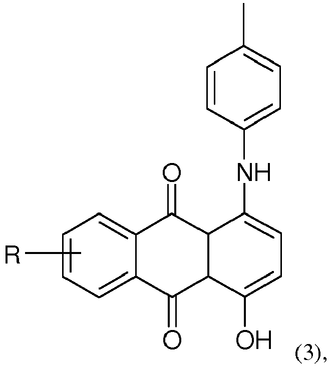 wobei
R ausgewählt ist aus der Gruppe, die aus H und p-Methylphenylamin-Rest besteht;
4: 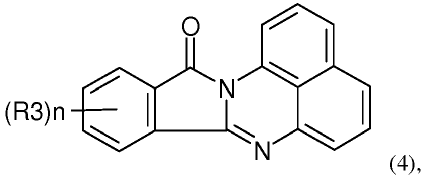 wobei
R3 Halogen ist;
n=4 ist;
5: 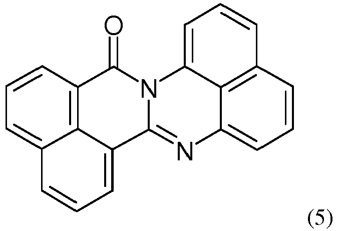
7: 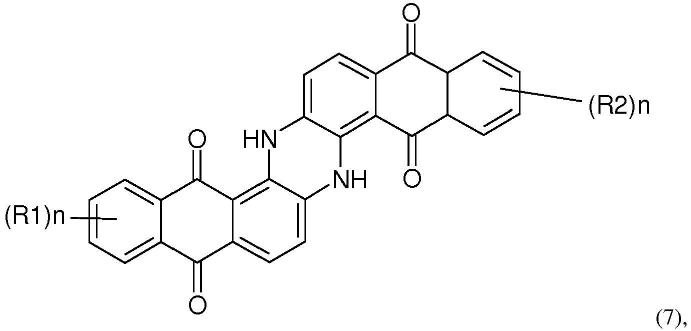 wobei
- R1 und R2 unabhängig voneinander für einen linearen oder verzweigten Alkylrest oder Halogen stehen;
- n für eine natürliche Zahl zwischen 0 und 4 steht;
8a, 8b: 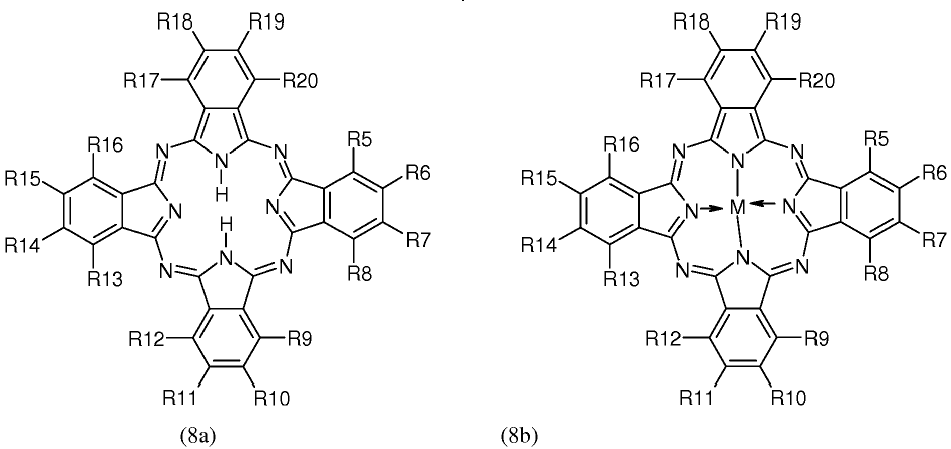 wobei
- die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind und
- M ist ausgewählt aus der Gruppe, die Aluminium, Nickel, Cobalt, Eisen, Zink, Kupfer und Mangan umfasst,
wobei die Farbmittel der Strukturen (1a), (1b), (3) und die Farbmittel der Strukturen (4), (5), (7), (8a/b) in der thermoplastischen Polymer-Zusammensetzung, bezogen auf die jeweilige Einzelkomponente, in Mengen von 0,000001 Gew.-% bis 1,000000 Gew.-%, bezogen auf die Gesamtpolymerzusammensetzung, verwendet werden.

2. Polymer-Zusammensetzung nach Anspruch 1, **dadurch gekennzeichnet, dass** das Farbmittel
der Struktur (7) ein Schüttvolumen bestimmt nach DIN ISO 787-11 von 2 l/kg - 10 l/kg, eine spezifische Oberfläche bestimmt nach DIN 66132 von 5
m²/g - 60 m²/g und einen pH-Wert bestimmt nach DIN ISO 787-9 von 4 - 9 aufweist.

3. Polymer-Zusammensetzung nach Anspruch 1, **dadurch gekennzeichnet, dass** die Farbmittel-Zusammensetzung die Farbmittel der Strukturen (1a) und (1b) in einem 1:1 Isomerengemisch enthält.

4. Polymer-Zusammensetzung nach Anspruch 1, **dadurch gekennzeichnet, dass** die Farbmittel-Zusammensetzung die Farbmittel der Strukturen (1a) und (1b) jeweils nur als ein reines Isomer enthält.

5. Polymer-Zusammensetzung nach einem der vorhergehenden Ansprüche, **dadurch gekennzeichnet, dass** diese weiterhin mindestens eine weitere Komponente enthält, ausgewählt aus der Gruppe, umfassend anorganische oder organische IR-Absorber, UV-Absorber und Ruß.

6. Fahrzeugscheibe aus einer Polymer-Zusammensetzung nach einem der vorhergehenden Ansprüche.

7. Fahrzeugscheibe nach Anspruch 6, **dadurch gekennzeichnet, dass** diese eine Kratzfestbeschichtung mit UV-Absorber aufweist.

## Claims

1. Transparent thermoplastic polymer composition containing polycarbonate as thermoplastic and a colouring agent composition for weathering-stable colouring of transparent thermoplastic compositions, containing a colouring agent combination of the structures chosen from:
I. (1a) and/or (1b) and (7)
II. (1a) and/or (1b) and (4) and (7)
III. (1a) and/or (1b) and (5) and (7)
IV. (3) and (4)
V. (3) and (5)
VI. (3) and (4) and (7)
VII. (3) and (5) and (7)
VIII. (1a) and/or (1b) and (8)
IX. (7) and (4)
X. (7) and (5)
wherein the structures are as follows:
1a, 1b: 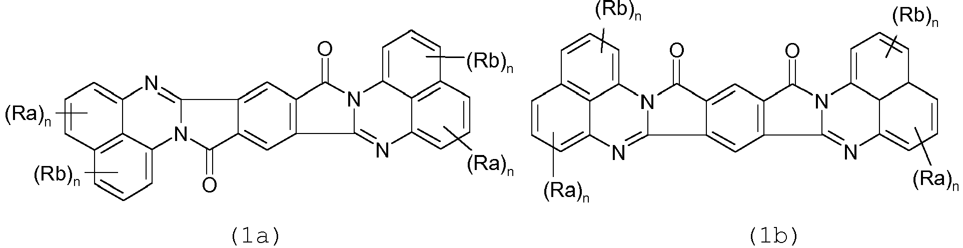 wherein
- Ra and Rb independently of each other represent a linear or branched alkyl radical, or halogen;
- n independently of the particular R represents a natural number between 0 and 3, where for n = 0 the radical is hydrogen;
3: 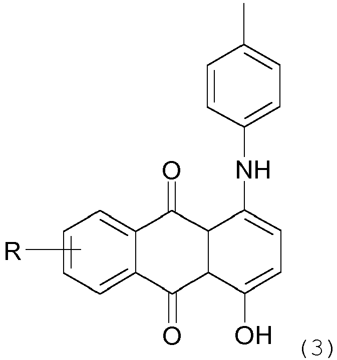 wherein
R is chosen from the group which consists of H and the p-methylphenylamine radical;
4: 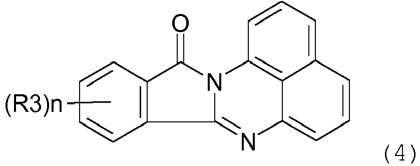 wherein
R3 is halogen;
n = 4;
5: 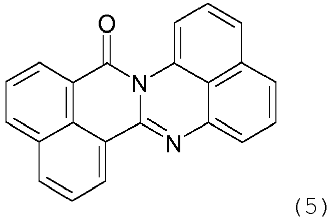
7: 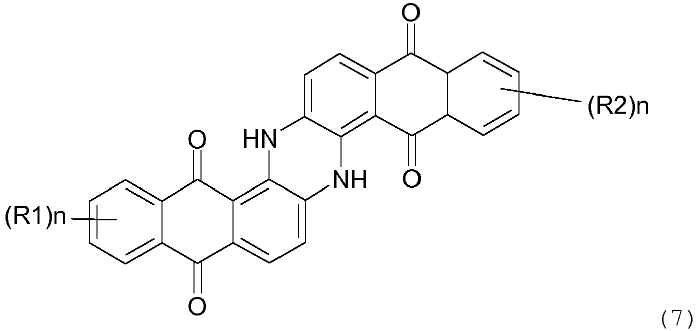 wherein
- R1 and R2 independently of each other represent a linear or branched alkyl radical, or halogen;
- n represents a natural number between 0 and 4;
8a, 8b: 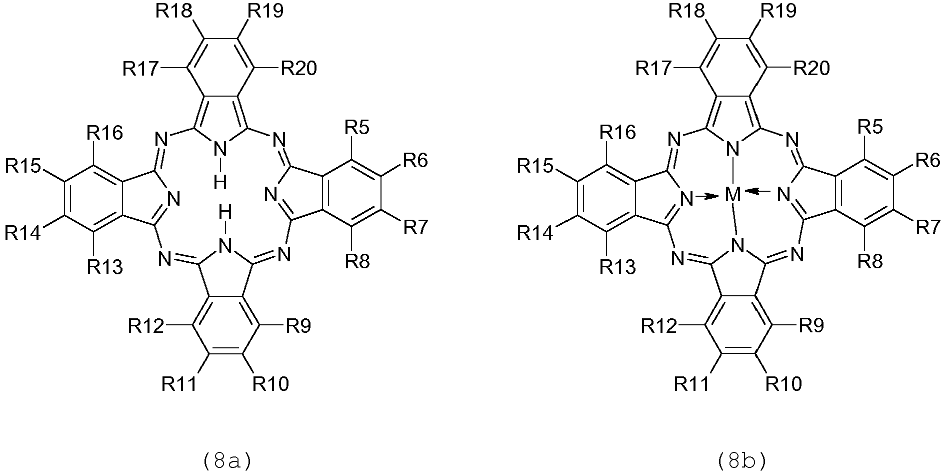 wherein
- the radicals R(5-20) are each independently of each other hydrogen, methyl, ethyl, propyl, isopropyl, butyl, isobutyl, tert-butyl, pentyl, neopentyl, hexyl, thexyl, fluorine, chlorine, bromine, sulfone or CN, and
- M is chosen from the group which includes aluminium, nickel, cobalt, iron, zinc, copper and manganese,
wherein the colouring agents of the structures (1a), (1b), (3) and the colouring agents of the structures (4), (5), (7), (8a/b) are used in the thermoplastic polymer composition in amounts, based on the particular individual component, of from 0.000001 wt.% to 1.000000 wt.%, based on the total polymer composition.

2. Polymer composition according to Claim 1, **characterized in that** the colouring agent of the structure (7) has a bulk volume, determined to DIN ISO 787-11, of 2 l/kg - 10 l/kg, a specific surface area, determined to DIN 66132, of 5 m²/g - 60 m²/g and a pH, determined to DIN ISO 787-9, of 4 - 9.

3. Polymer composition according to Claim 1, **characterized in that** the colouring agent composition contains the colouring agents of the structures (1a) and (1b) in a 1:1 isomer mixture.

4. Polymer composition according to Claim 1, **characterized in that** the colouring agent composition contains the colouring agents of the structures (1a) and (1b) in each case only as a pure isomer.

5. Polymer composition according to any of the preceding claims, **characterized in that** this furthermore contains at least one further component chosen from the group including inorganic or organic IR absorbers, UV absorbers and carbon black.

6. Vehicle pane comprising a polymer composition according to one of the preceding claims.

7. Vehicle pane according to Claim 6, **characterized in that** this has a scratch-resistant coating with UV absorbers.

## Revendications

1. Composition de polymère thermoplastique transparente, contenant du polycarbonate en tant que plastique thermoplastique
et
une composition de colorant destinée à la coloration stable aux intempéries de compositions thermoplastiques transparentes, contenant une combinaison de colorants dont les structures sont choisies parmi :
I. (1a) et/ou (1b) et (7)
II. (1a) et/ou (1b) et (4) et (7)
III. (1a) et/ou (1b) et (5) et (7)
IV. (3) et (4)
V. (3) et (5)
VI. (3) et (4) et (7)
VII. (3) et (5) et (7)
VIII. (1a) et/ou (1b) et (8)
IX. (7) et (4)
X. (7) et (5)
les structures étant comme suit :
1a, 1b : 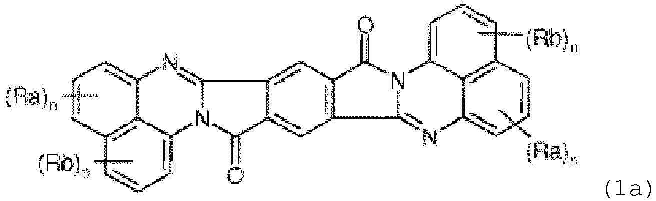 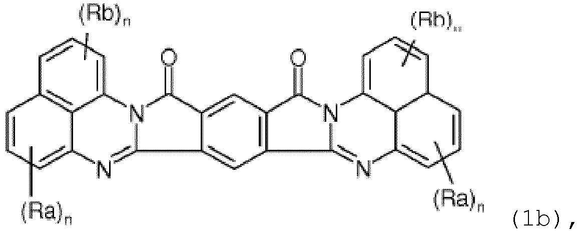
- Rₐ et R_{b} représentant indépendamment l'un de l'autre un radical alkyle linéaire ou ramifié ou halogène ;
- n représentant indépendamment de chaque R un nombre naturel entre 0 et 3, le radical étant hydrogène lorsque n = 0 ;
3 : 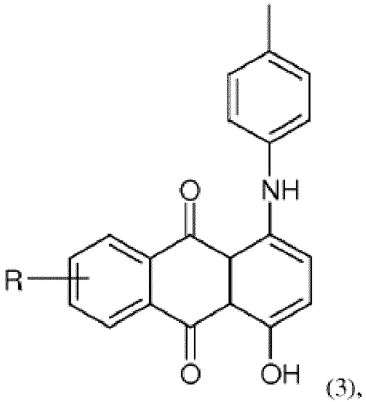 R étant choisi dans le groupe qui est constitué de H et d'un radical p-méthylphénylamine ;
4 : 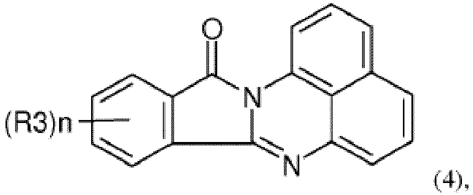
R3 étant halogène ;
n = 4 ;
5 : 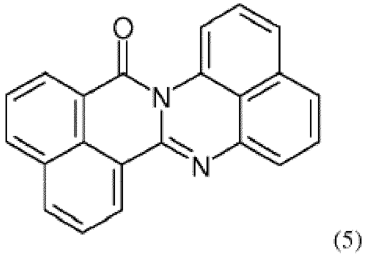
7 : 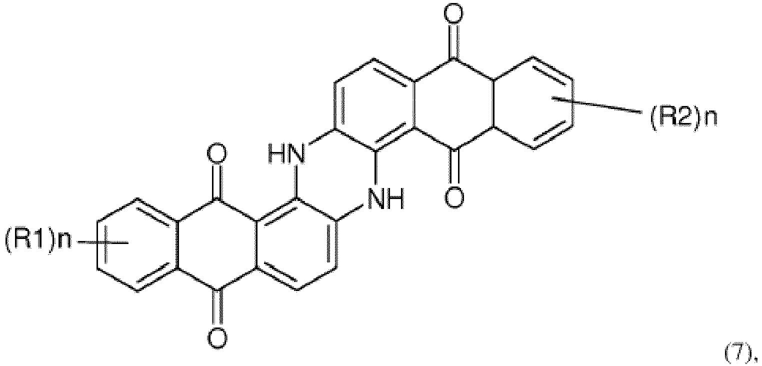
- R1 et R2 représentant indépendamment l'un de l'autre un radical alkyle linéaire ou ramifié ou halogène ;
- n représentant un nombre naturel entre 0 et 4 ;
8a, 8b : 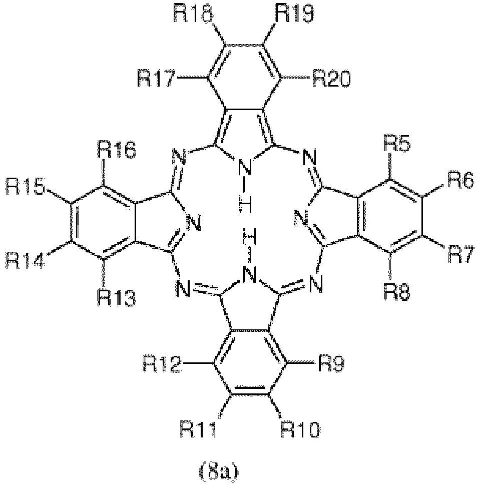 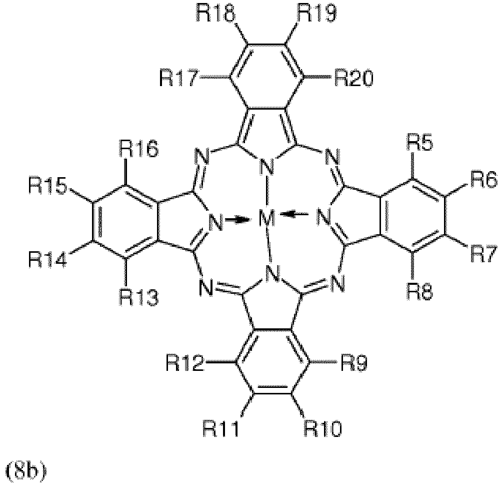
- les radicaux R(5 à 20) étant indépendamment les uns des autres hydrogène, méthyle, éthyle, propyle, isopropyle, butyle, isobutyle, tert-butyle, pentyle, néopentyle, hexyle, thexyle, fluor, chlore, brome, sulfone ou CN et
- M étant choisi dans le groupe qui comprend l'aluminium, le nickel, le cobalt, le fer, le zinc, le cuivre et le manganèse,
les colorants des structures (1a), (1b), (3) et les colorants des structures (4), (5), (7), (8a/b) dans la composition de polymère thermoplastique, par rapport à chacun des composants individuels, étant utilisés en des quantités de 0,000001% en poids à 1,000000% en poids, par rapport à la composition totale de polymère.

2. Composition de polymère selon la revendication 1, **caractérisée en ce que** le colorant de structure (7) présente un volume apparent, déterminé selon la norme DIN ISO 787-11, de 2 l/kg à 10 1/kg, une surface spécifique, déterminée selon la norme DIN 66132, de 5 m²/g à 60 m²/g et une valeur de pH, déterminée selon la norme DIN ISO 787-9 de 4 à 9.

3. Composition de polymère selon la revendication 1, **caractérisée en ce que** la composition de colorant contient les colorants des structures (1a) et (1b) en un mélange d'isomères de 1:1.

4. Composition de polymère selon la revendication 1, **caractérisée en ce que** la composition de colorant contient les colorants des structures (1a) et (1b) à chaque fois seulement en tant qu'isomère pur.

5. Composition de polymère selon l'une quelconque des revendications précédentes, **caractérisée en ce qu'**elle contient en outre au moins un autre composant, choisi dans le groupe comprenant les absorbants IR inorganiques ou organiques, les absorbants UV et la suie.

6. Vitre de véhicule composée d'une composition de polymère selon l'une quelconque des revendications précédentes.

7. Vitre de véhicule selon la revendication 6, **caractérisée en ce qu'**elle présente un revêtement antirayure comportant un absorbant UV.
